(19)

Europäisches
Patentamt
European
Patent Office
Office européen
des brevets

(11) **EP 4 415 211 A1**

(12) **EUROPEAN PATENT APPLICATION**

(43) Date of publication:
**14.08.2024 Bulletin 2024/33**

(21) Application number: **24153912.1**

(22) Date of filing: **25.01.2024**

(51) International Patent Classification (IPC):
***H02J 7/00*** (2006.01)

(52) Cooperative Patent Classification (CPC):
**H02J 7/00045; H02J 7/00034; H02J 7/0013;**
**H02J 7/00712**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.02.2023 US 202363443505 P**
**22.01.2024 US 202418419371**

(71) Applicant: **Electric Power Systems, Inc.**
**North Logan, Utah 84341 (US)**

(72) Inventors:
• **ARMSTRONG, Michael**
**North Logan (US)**
• **JAYAGONDAR, Suresh**
**North Logan (US)**

(74) Representative: **Abel & Imray LLP**
**Westpoint Building**
**James Street West**
**Bath BA1 2DA (GB)**

(54) **MULTI-STRING COORDINATOR**

(57) A method for operating a multi-string coordinator is disclosed herein. In various embodiments, the multi-string coordinator comprises: receiving, via the multi-string coordinator, battery data from a first battery power management unit and a second battery power management unit in a battery system; determining, via the multi-string coordinator, whether a string imbalance between the first battery power management unit and the second battery power management unit exceeds a string imbalance threshold; and commanding, via the multi-string coordinator, the first battery power management unit to charge a first string of battery modules of the first battery power management unit from a first voltage to a second voltage in response to the string imbalance exceeding the string imbalance threshold.

## Description

FIELD

The present disclosure generally relates to apparatus, systems, and methods for coordinating charging of a multi-string battery system with a main power bus.

BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may be inventions.

Chargers that are typically utilized for electrically powered cars have charging interfaces that are various and distinct. For electrically powered aircrafts, a charging interface that is capable of interfacing with charging interfaces that are typically utilized for electrically powered cars, as well as potentially communicating with alternative charging interfaces for the electrically powered aircraft may be desirable.

Battery modules for use in electrically powered aircrafts have to meet certain standards in order to be certified for flight. As electrically powered aircrafts are continuously being developed, changes to a charging interface of the electrically powered aircraft has a potential to occur based on technology that has yet to be developed. However, modifying an existing battery module (or system) on an electrically powered aircraft can be immensely expensive (i.e., cost of development and certification can be exorbitant) if the charging interface is a component of the battery system.

SUMMARY

A method for operating a multi-string coordinator is disclosed herein. In various embodiments, the multi-string coordinator comprises: receiving, via the multi-string coordinator, battery data from a first battery power management unit and a second battery power management unit in a battery system; determining, via the multi-string coordinator, whether a string imbalance between the first battery power management unit and the second battery power management unit exceeds a string imbalance threshold; and commanding, via the multi-string coordinator, the first battery power management unit to charge a first string of battery modules of the first battery power management unit from a first voltage to a second voltage in response to the string imbalance exceeding the string imbalance threshold.

In various embodiments, the method further comprises: receiving, via the multi-string coordinator, a charger identification associated with a charger electrically coupled to the multi-string coordinator; and transmitting, via the multi-string coordinator, the charger identification to the first battery power management unit and the second battery power management unit. In various embodiments, the first battery power management unit is charged based on a charging protocol associated with the charger identification. In various embodiments, the method further comprises transmitting, via the multi-string coordinator, a capacity value of the battery system to the first battery power management unit and the second battery power management unit based on the charger identification.

In various embodiments, in response to commanding the first battery power management unit, the first string of battery modules are charged via the first battery power management unit from the first voltage to the second voltage. In various embodiments, the method further comprises commanding, via the multi-string coordinator, the first battery power management unit and the second battery power management unit to charge the first string of battery modules of the first battery power management unit and a second string of battery modules of the second battery power management unit together in response to the string imbalance falling below the string imbalance threshold.

In various embodiments, the string imbalance comprises a percentage voltage difference between the first battery power management unit and the second battery power management unit.

A multi-string coordinator is disclosed herein. In various embodiments, the multi-string coordinator comprises: a tangible, non-transitory device configured to communicate with a processor; the tangible, non-transitory device having instructions stored thereon that, in response to the processor, cause the processor to perform operations comprising: receiving, via the processor, a charger identification associated with a charger electrically coupled to the multi-string coordinator; and transmitting, via the processor, one of the charger identification and a capacity of the charger to a first battery power management unit and a second battery power management unit of a battery system of an electric vehicle.

In various embodiments, in response to the transmitting, charging a first string of battery modules of the first battery power management unit and a second string of battery modules of the second battery power management unit based on the capacity. In various embodiments, the operations further comprise commanding the first battery power management unit to charge the first string of battery modules from a first voltage to a second voltage to correcting a string imbalance between the first string of battery modules and the second string of battery modules. In various embodiments, the string imbalance comprises a voltage difference percentage that is greater than a voltage difference percentage threshold.

In various embodiments, the multi-string coordinator further comprises an indicator, wherein the operations further comprise: receiving, via the processor and from the first battery power management unit, a fault indicator; and commanding, via the processor, the indicator to provide an indication that the first battery power management unit is faulty. In various embodiments, the operations further comprise transmitting, via the processor, the fault indicator to the charger.

In various embodiments, the operations further comprise: determining, via the processor, whether a string imbalance between the first battery power management unit and the second battery power management unit exceeds a string imbalance threshold; and commanding, via the processor, the first battery power management unit to charge a first string of battery modules of the first battery power management unit from a first voltage to a second voltage in response to the string imbalance exceeding the string imbalance threshold.

An energy storage system is disclosed herein. In various embodiments, the energy storage system comprises: a battery system comprising a plurality of battery power management units, each battery power management unit in the plurality of battery power management units comprising a string of battery modules; and a battery management system configured to control a discharge of the string of battery modules; and a multi-string coordinator electrically coupled to the battery management system of each battery power management unit in the plurality of battery power management units, the multi-string coordinator configured to communicate with the battery management system of each battery power management unit in the plurality of battery power management units.

In various embodiments, the multi-string coordinator is configured to communicate with a charger, the charger configured to charge a first battery power management unit and a second battery power management unit in the plurality of battery power management units. In various embodiments, the multi-string coordinator is further configured to receive a charger identification from the charger to the first and the second battery power management units. In various embodiments, the multi-string coordinator is further configured to transmit one of a capacity of the charger and the charger identification to the first battery power management unit and the second battery power management unit.

In various embodiments, the energy storage system further comprises a power switch, wherein the multi-string coordinator further comprises a power source, and wherein the power switch is configured to transition the power source from an "ON" state to an "OFF" state and vice versa.

In various embodiments, an electric vehicle comprises the energy storage system.

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.

FIG. 1 illustrates a schematic view of an energy storage system of an electric vehicle with a multi-string coordinator, in accordance with various embodiments;

FIG. 2 illustrates a process performed by the multi-string coordinator, in accordance with various embodiments;

FIG. 3 illustrates a process performed by the multi-string coordinator, in accordance with various embodiments; and

FIG. 4 illustrates a charging ecosystem for use with the energy storage system of FIG. 1, in accordance with various embodiments.

DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

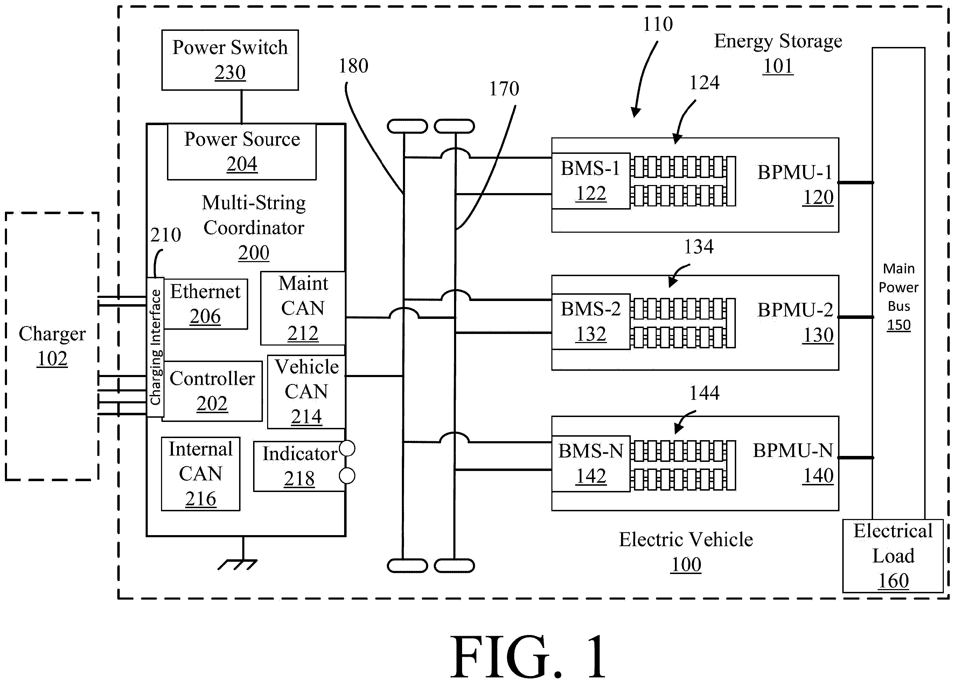

Referring now to FIG. 1, a schematic view of a multi-string coordinator 200 for use in an electric vehicle 100 (e.g., an electrically powered aircraft, an electrically powered car, an electrically powered boat, etc.) is illustrated, in accordance with various embodiments. In various embodiments, the multi-string coordinator 200 is for use in an electrically powered aircraft (i.e., the electric vehicle 100 is an electrically powered aircraft). However, the present disclosure is not limited in this regard.

The multi-string coordinator 200 is configured to interface with a charger 102 (e.g., a charging system configured to charge a battery system of the electric vehicle 100) and a battery system 110 of the electric vehicle 100. In various embodiments, the charger 102 comprises a combined charging system (CCS) configured for high-power DC fast charging. Although described herein as comprising a United States style combined charging system ("CCS1"), the charging system is not limited in this regard. For example, the combined charging system can comprise a European style combined charging system ("CCS2"), Chademo, GBT, or any other electric vehicle charging system or emerging aerospace standard charging system, in accordance with various embodiments.

In various embodiments, the charger 102 can be in electrical communication with (i.e., powered by) a battery system of a charging system (e.g., battery system 510 of charging system 501 as described further herein), a plurality of battery modules, an electrical grid, or any other suitable source of power known in the art. The present disclosure is not limited in this regard. In various embodiments, the battery system 110 of the electric vehicle 100 is configured to power an electrical load 160 (e.g., an electric motor or the like) through a main power bus 150 or the like.

The battery system 110 of the electric vehicle 100 comprises a plurality of battery power management units ("BPMU") (e.g., BPMU-1 120, BPMU-2 130, and BPMU-N 140). A BPMU (e.g., BPMU-1 120, BPMU-2 130, and BPMU-N 140) comprises a battery management system ("BMS") (e.g., BMS-1 122, BMS-2 132, and BMS-N 142) and a string of battery modules (e.g., string of battery modules 124, 134, 144) electrically coupled to the BMS. In this regard, each BPMU in the plurality of BMUs of the battery system 110 of the electric vehicle 100 is an independent battery system (i.e., capable of being controlled independently of any other BPMU in the battery system 110 of the electric vehicle 100). A "string of battery modules" as referred to herein includes a plurality of battery modules extending from a negative terminal of the BMS to a positive terminal of the BMS.

In various embodiments, as described further herein, the multi-string coordinator 200 can be configured as a central system to handle charging of the battery system 110 of the electric vehicle 100 and protect against string imbalance as described further herein. For example, the BPMU-1 120 and the BPMU-2 130 of the battery system 110 for the electric vehicle 100 can have a string imbalance during charging of the battery system 110. "String imbalance" as disclosed herein, is a voltage imbalance between a string of battery modules 124 of the BPMU-1 120 and a string of battery modules 134 of the BPMU-2 130 that is outside an acceptable voltage imbalance for charging the string of battery modules 124 and the string of battery modules 134 over the same binary unit system ("BUS").

In various embodiments, the multi-string coordinator 200 is an on-board system of the electric vehicle 100 (e.g., an electrically powered aircraft). However, the multi-string coordinator 200 is independent from battery management (i.e., the multi-string coordinator 200 is an independent component from the BMS of each BPMU in battery system 110) and non-operation equipment during aircraft operation (i.e., in a powered off state). For example, the multi-string coordinator 200 is configured to provide commands to a BMS (e.g., BMS-1 122, BMS-2 132, and/or BMS-N 142) of a BPMU (e.g., BPMU-1 120, BPMU-2 130, and/or BPMU-N 140) in the plurality of BPMUs of the battery system 110 based on data received during charging of the plurality of BPMUs (e.g., data received from each BMS in the battery system 110) as described further herein. In this regard, the multi-string coordinator 200 provides an additional layer of protection during a charging process to the battery system 110 for the electric vehicle 100 by protecting against string imbalance as outlined above.

In various embodiments, the multi-string coordinator 200 can facilitate multi-string charging. For example, as each BPMU (e.g., BPMU-1 120, BPMU-2 130, and BPMU-N) in the plurality of BPMUs is essentially an independent battery system with a corresponding BMS (e.g., BMS-1 122 for BPMU-1 120, BMS-2 132 for BPMU-2 130, and BMS-N 142 for BPMU-N 140), multi-string coordinator 200 is configured to coordinate charging all of the BPMUs in the plurality of BPMUs, as described further herein.

In various embodiments, the multi-string coordinator 200 disclosed herein comprises a charging interface 210. The charging interface 210 of the multi-string coordinator 200 interfaces with a charging interface 210 of the charger 102. In this regard, the BPMUs do not have to be designed or configured to interface with common chargers. Additionally, as charging interfaces of chargers (e.g., charger 102) change, the multi-string coordinator 200 can be changed without having to change any of the BPMUs (e.g., BPMU-1 120, BPMU-2 130, and/or BPMU-N 140), in accordance with various embodiments.

In various embodiments, the multi-string coordinator 200 can also include data handling capabilities (e.g., through an internal controller area network ("CAN")). In various embodiments, the multi-string coordinator 200 can perform data collection. For example, each BPMU (e.g., BPMU-1 120, BPMU-2 130, and/or BPMU-N 140) can collect data during aircraft operation and store data internally via a respective BMS (e.g., BMS-1 122 for BPMU-1 120, BMS-2 132 for BPMU-2 130, and BMS-N 142 for BPMU-N 140). During charging or maintenance of the BPMUs (e.g., BPMU-1 120, BPMU-2 130, and/or BPMU-N 140), the multi-string coordinator 200 is powered and operational. Thus, the multi-string coordinator 200 can download the data from each BMS (e.g., BMS-1 122 for BPMU-1 120, BMS-2 132 for BPMU-2 130, and BMS-N 142 for BPMU-N 140) efficiently, so that the multi-string coordinator 200 can package the data and send it to the charger 102 upon request. Additionally, in various embodiments, the data collection can be utilized for capacity data upgrades, in accordance with various embodiments. For example, data collected can be used to run capacity algorithms to match the manual capacity check process to compare and achieve higher accuracy.

In various embodiments, the multi-string coordinator 200 further comprises a controller 202, a power source 204, an ethernet 206, a maintenance CAN 212, and a vehicle CAN 214. In various embodiments, the controller 202 can be configured as a central network element or hub to access various systems and components of the multi-string coordinator 200. In various embodiments, the controller 202 can comprise a processor. In various embodiments, the controller 202 can be implemented in a single processor. In various embodiments, the controller 202 can be implemented as and may include one or more processors and/or one or more tangible, non-transitory memories (e.g., memory) and be capable of implementing logic. Each processor can be a general-purpose processor, a digital signal processor ("DSP"), an application specific integrated circuit ("ASIC"), a field programmable gate array ("FPGA"), or other programmable logic device, discrete gate or transistor logic, discrete hardware components, or any combination thereof. The controller 202 can comprise a processor configured to implement various logical operations in response to execution of instructions, for example, instructions stored on a non-transitory, tangible, computer-readable medium configured to communicate with the controller 202.

System program instructions and/or controller instructions can be loaded onto a non-transitory, tangible computer-readable medium of the controller 202 having instructions stored thereon that, in response to execution by a processor of the controller 202, cause the controller 202 to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

In various embodiments, the controller 202 is in electrical communication with the maintenance CAN 212, the vehicle CAN 214, the internal CAN 216, and/or the indicator 218. In this regard, the controller 202 is configured to receive data, or other communication, from the maintenance CAN 212, the vehicle CAN 214, the internal CAN 216, and/or the indicator 218. Furthermore, the controller 202 can be configured to send commands through the maintenance CAN 212, the vehicle CAN 214, the internal CAN 216, and/or the indicator 218.

In various embodiments, the power source 204 can be operably coupled to a power switch 230. In this regard, in various embodiments, the power source 204 can be switched between an "ON" state and an "OFF" state via the power switch 230. Stated another way, in various embodiments, the multi-string coordinator 200 can be switched to an OFF state. For example, the multi-string coordinator 200 can be switched to an "ON" state during a maintenance operation and an OFF state during operation of the electric vehicle 100, or the like. The present disclosure is not limited in this regard.

In various embodiments, the multi-string coordinator 200 is configured to communicate with each BPMU (e.g., BPMU-1 120, BPMU-2 130, and/or BPMU-N 140) in the plurality of BPMUs in the battery system 110. For example, the multi-string coordinator 200 can communicate with each BPMU (e.g., BPMU-1 120, BPMU-2 130, and/or BPMU-N 140) in the plurality of BPMUs via the maintenance CAN 212 (e.g., through a maintenance CAN BUS 170) and/or the vehicle CAN 214 (e.g., through a vehicle CAN BUS 180). In this regard, the multi-string coordinator 200 can communicate with each BPMU (e.g., BPMU-1 120, BPMU-2 130, and/or BPMU-N 140) in the plurality of BPMUs via the vehicle CAN 214 through the vehicle CAN BUS 180 for collection of battery system data similar to that of the vehicle. Similarly, the multi-string coordinator 200 can communicate with each BPMU (e.g., BPMU-1 120, BPMU-2 130, and/or BPMU-N 140) in the plurality of BPMUs via the maintenance CAN 212 through the maintenance CAN BUS 170 for transferring maintenance data and charge control to and from each BPMU in the plurality of BPMUs.

In various embodiments, the multi-string coordinator 200 can determine a number of BPMUs (e.g., BPMU-N 140) (e.g., via the maintenance CAN 212 and/or via the vehicle CAN 214). In various embodiments, based on the number of CAN identification numbers (CAN IDs) and their identification, the multi-string coordinator 200 can determine the number of BPMU's in the system and their identity based on data transmitted on the CAN (e.g., via the maintenance CAN 212 and/or via the vehicle CAN 214).

In various embodiments, the multi-string coordinator 200 can determine whether there is a string imbalance (i.e., whether there is a voltage imbalance between BPMU-1 120 and BPMU-2 130 or the like) (e.g., via the maintenance CAN 212 and/or via the vehicle CAN 214), as described further herein. In various embodiments, the multi-string coordinator 200 is capable of correcting string imbalance by charging a string of battery modules in a first BPMU up to a BUS voltage.

For example, a first BPMU (e.g., BPMU-1 120) can have a first voltage and a second BPMU (e.g., BPMU-2 130) can have a second voltage. The first voltage can be less than the second voltage. Stated another way, a voltage difference can exist between the first voltage and the second voltage. Based on the voltage difference, a percent voltage difference from the second voltage can be calculated (i.e.,

$$\frac{V_2 - V_1}{V_2} = \frac{\Delta V}{100},$$

) where $V_2$ is the second voltage, $V_1$ is the first voltage, an $\Delta V$ is the voltage difference). In various embodiments, as described further herein, the percent voltage difference can be less than a threshold voltage difference. For example, a threshold voltage difference can be 5%. In this regard, in response to the percent voltage difference being greater than 5%, the multi-string coordinator 200 can determine that a string imbalance between the first BPMU (e.g., BPMU-1 120) and the second BPMU (e.g., BPMU-2 130) exists. In this regard, in response to determining the string imbalance exists, the multi-string coordinator 200 can command the first BPMU (e.g., BPMU-1 120) from the first voltage to a new voltage. The new voltage can have a percent voltage difference with the second BPMU (e.g., BPMU-2 130) that is below the percent voltage difference. In this regard, the multi-string coordinator 200 can correct the string imbalance and facilitate charging of the first BPMU (e.g., BPMU-1 120) and the second BPMU (e.g., BPMU-2 130) together as described further herein, in accordance with various embodiments.

In various embodiments, the multi-string coordinator 200 communicates with the charger 102 over a high-speed communication BUS (e.g., via the maintenance ethernet 206). In various embodiments, the multi-string coordinator 200 can communicate faults to maintenance personnel through the indicator 218. For example, in response to a battery fault in one of the BPMUs in the plurality of BPMUs of the battery system 110, the controller 202 can command a first light to illuminate (e.g., a red light or the like) through the indicator 218, in accordance with various embodiments. Similarly, if there are no battery faults, the controller 202 can command a second light to illuminate (e.g., a green light or the like).

In various embodiments, the multi-string coordinator 200 is configured to receive a battery capacity value from the battery system 110 and communicate the capacity value to each BPMU (e.g., BPMU-1 120, BPMU-2 130, and BPMU-N 140) via a CAN (e.g., via the maintenance CAN 212 and/or the vehicle CAN 214). In this regard, the battery capacity value of the battery system 110 as a whole can be known by each BPMU (e.g., BPMU-1 120, BPMU-2 130, and BPMU-N 140) in the battery system 110.

In various embodiments, the multi-string coordinator 200 can identify a type of charger for the charger 102. For example, as described previously herein, the multi-string coordinator 200 can comprise a charging interface 210 that is capable of interfacing with various chargers. In this regard, based on a charger 102 that is coupled to the charging interface 210, the multi-string coordinator 200 can identify the type of the charger and relay the information to each BPMU (e.g., BPMU-1 120, BPMU-2 130, and BPMU-N 140) in the plurality of BPMUs in the battery system 110 to facilitate an appropriate charging protocol for the battery system 110, in accordance with various embodiments.

In various embodiments, the charging interface 210 of the multi-string coordinator 200 can comprise a discrete pin compatibility. For example, the charging interface 210 can be a modular interface to support various chargers as described previously herein.

In various embodiments, the multi-string coordinator 200 is further configured to communicate fault data to the charger 102. In this regard, the multi-string coordinator 200, based on its communication with each BPMU (e.g., BPMU-1 120, BPMU-2 130, and BPMU-N 140) can identify a faulty BPMU and communicate to the charger 102 which BPMU is faulty in accordance with various embodiments. In this regard, faulty BPMUs can be identified more easily and maintenance operations (i.e., swapping out the faulty BPMU) can be performed more efficiently, in accordance with various embodiments.

In various embodiments, the multi-string coordinator 200 can be lightweight and configured to have a minimal physical envelope. In this regard, the multi-string coordinator 200 will not add significant weight to the electric vehicle 100, which can be an important factor for electrically powered aircrafts.

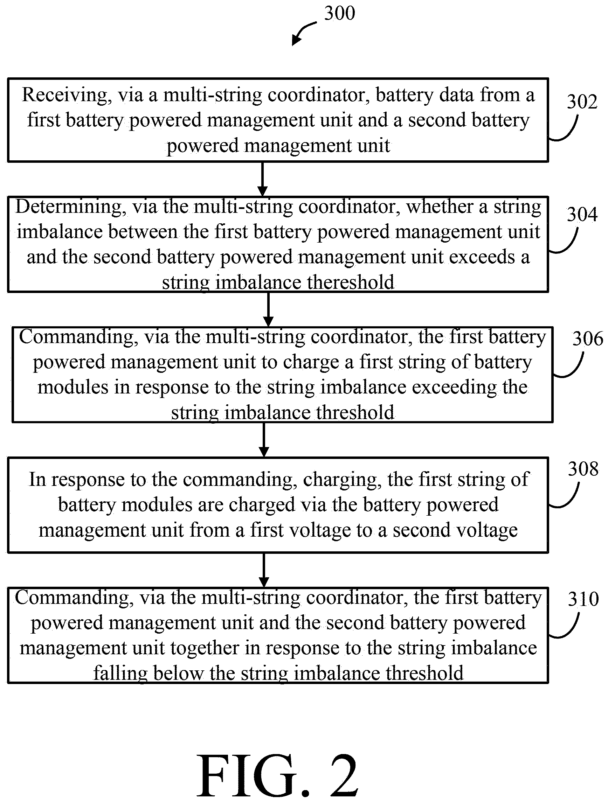

With combined reference now to FIGs. 1 and 2, a process 300 (FIG. 2) for correcting string imbalance during charging, performed by the multi-string coordinator 200 from FIG. 1 is illustrated, in accordance with various embodiments.

In various embodiments, the process 300 comprises receiving, via the multi-string coordinator 200, battery data from each BPMU (e.g., BPMU-1 120, BPMU-2 130, and BPMU-N 140) in the plurality of BPMUs of the battery system 110 (step 302). In this regard, prior to charging, the multi-string coordinator 200 can receive battery data from each BPMU (e.g., BPMU-1 120, BPMU-2 130, and BPMU-N 140) in the plurality of BPMUs of the battery system 110. As described further herein, based on the battery data received from the plurality of BPMUs, the multi-string coordinator 200 can determine a charging process to be performed by the battery system 110. The multi-string coordinator 200 can receive the battery data from each BMS (e.g., BMS-1 122, BMS-2 132, and BMS-N 142). In this regard, the multi-string coordinator 200 can request battery data from each BMS (e.g., BMS-1 122, BMS-2 132, and BMS-N 142), and in response to requesting the battery data, each BMS (e.g., BMS-1 122, BMS-2 132, and BMS-N 142) can transmit battery data associated with each BPMU (e.g., BPMU-1 120, BPMU-2 130, and BPMU-N 140) to the multi-string coordinator 200, in accordance with various embodiments. In various embodiments, each BMS (e.g., BMS-1 122, BMS-2 132, and BMS-N 142) can automatically and/or continuously transmit battery data from each (e.g., BMS-1 122, BMS-2 132, and BMS-N 142) to the multi-string coordinator 200 (i.e., in response to the multi-string coordinator 200 being in an "ON" state as described previously herein).

In various embodiments, battery data can include voltage data, current data, temperature data, capacity data, etc. In this regard, the multi-string coordinator 200 can also receive operational data from a prior flight cycle, or the like prior to charging, during a flight, etc. The present disclosure is not limited in this regard. In various embodiments, the multi-string coordinator 200 can be configured to transmit the operational data from a respective flight cycle off-board (e.g., to a monitoring system 540 of a charging system 501 as described further herein), in accordance with various embodiments. Stated another way, operational data that is accumulated during a respective flight cycle can be temporarily stored in a memory of the multi-string coordinator 200 and transmitted off-board to a monitoring system 540 or the like in response to the charger 102 being electrically coupled to the multi-string coordinator 200, in accordance with various embodiments.

In various embodiments, the process 300 further comprises determining, via the multi-string coordinator 200, whether a string imbalance between a first string of battery modules (e.g., the string of battery modules 124 of the BPMU-1 120) and a second string of battery modules (e.g., the string of battery modules 134 of the BPMU-2 130) exceeds a string imbalance threshold (step 304). In this regard, the multi-string coordinator 200 can compare a voltage difference percentage of the string of battery modules 124 and the string of battery modules 134 to a voltage difference threshold. Based on the voltage difference threshold, the multi-string coordinator 200 can decide whether the string of battery modules 124 and the string of battery modules 134 can be charged together, or if one of the string of battery modules 124 and the second string of battery modules 134 should be charged first in order to correct a string imbalance between the string of battery modules 124 and the string of battery modules 134.

In various embodiments, the process 300 further comprises commanding, via the multi-string coordinator 200, the first battery power management unit (e.g., BPMU-1 120) to charge a first string of battery modules (e.g., the string of battery modules 124) in response to the string imbalance exceeding the string imbalance threshold (step 306). In response to the commanding in step 306, the first BMS (e.g., BMS-1 120) can charge the string of battery modules 124 (e.g., via the BMS-1 122 and through the charger 102) from a first voltage to a second voltage (step 308). In this regard, in response to the first voltage of the string of battery modules 124 being less than a voltage of the string of battery modules 134 and the voltage difference percentage being greater than a threshold percentage difference, the string of battery modules 124 can be charged to the second voltage that would reduce the voltage difference percentage between the first voltage of the string of battery modules 124 and the voltage of the string of battery modules 134 to a voltage difference percentage that is less than the threshold percentage difference.

In various embodiments, steps 304, 306, and 308 can be performed for each BPMU (e.g., BMS-1 122, BMS-2 132, and BMS-N 142) in the plurality of BPMUs in the battery system 110. For example, prior to charging all of the BPMUs in the plurality of BPMUs in the battery system 110, the multi-string coordinator 200 can ensure that all of the BPMUs are below the threshold voltage difference with each other. Stated another way, each string of battery modules (e.g., string of battery modules 124, 134, 144) can be within a set voltage difference percentage from each other prior to charging all of the string of battery modules together via the charger 102, in accordance with various embodiments. In this regard, the plurality of BPMUs in the battery system 110 can be charged efficiently and effectively, in accordance with various embodiments.

In various embodiments, the process 300 further comprises commanding, via the multi-string coordinator 200, the plurality of BPMUs in the battery system 110 together in response to the string imbalance falling below the string imbalance threshold (step 310). In this regard, the plurality of BPMUs in the battery system 110 can be charged at a BUS voltage, since all the BPMUs in the battery system 110 are below the string imbalance threshold with respect to any other BPMU in the battery system 110.

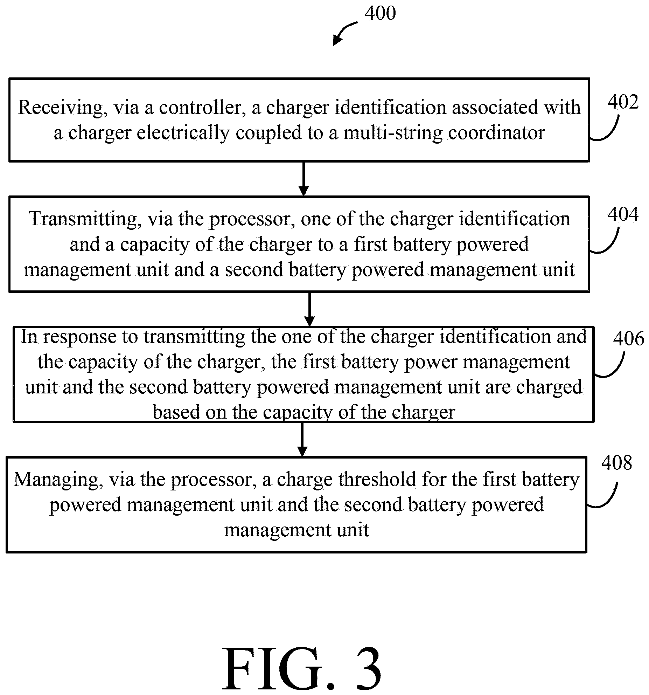

Referring now to FIGs. 1 and 3, a process 400 (FIG. 3) for operating the multi-string coordinator 200 from FIG. 1, is illustrated, in accordance with various embodiments. In various embodiments, the process 400 comprises receiving, via a controller 202, a charger identification associated with a charger 102 electrically coupled to a multi-string coordinator 200 (step 402). In this regard, as described previously herein, the charging interface 210 of the multi-string coordinator 200 is configured to interface with a plurality of chargers. For example, the charging interface 210 can interface with a United States style combined charging system ("CCS1"), a European style combined charging system ("CCS2"), Chademo, GBT, or any other electric vehicle charging system or emerging aerospace standard charging system, in accordance with various embodiments. As such, the multi-string coordinator 200 can receive from the charger 102, a charger identification that indicates what type of charger the charger 102 is. In various embodiments, in response to receiving the charger identification, the multi-string coordinator 200 can modify charge limits of the battery system 110 (i.e., to facilitate fast charging or the like).

In various embodiments, the process 400 further comprises transmitting, via the processor, one of the charger identifications and a capacity of the charger to a first battery powered management unit (e.g., BPMU-1 120) and a second battery powered management unit (e.g., BPMU-2 130) of a battery system 110 (step 404). In this regard, based on a type of charger 102, a charging protocol for the battery system 110 may change. For example, various chargers can have differing capacities, discharge rates, etc. As such, in response to transmitting one of the charger identifications and the capacity of the battery system 110, the first battery powered management unit (e.g., BPMU-1 120) and a second battery powered management unit (e.g., BPMU-2 130) of a battery system 110 are charged based on the capacity of the charger 102 (step 406).

In various embodiments, the process 400 further comprises managing, via the processor, a charge threshold for the first battery powered management unit (e.g., BPMU-1 120) and the second battery powered management unit (e.g., BPMU-2 130) of the battery system 110 (step 408). Managing a charge threshold, as referred to herein, includes receiving, from each battery powered management unit (e.g., BMS-1 122 of BPMU-1 120, BMS-2 132 of BPMU-2, BPMU-N 142 of BMS-N 140), charging data (e.g., voltage data, current data, etc.) of a respective battery powered management unit, and modifying the charging protocol (e.g., by commanding the charger 102) based on determining that a charge threshold (e.g., a voltage threshold of a BPMU or the like) is exceeded. In various embodiments, the multi-string coordinator 200 can determine whether the charger 102 can be modified for step 408 based on the charger identification from step 402. In various embodiments, the multi-string coordinator 200 can determine whether a thermal management system of the energy storage 101 can handle the modifications prior to commanding the charger 102 to modify the charging protocol.

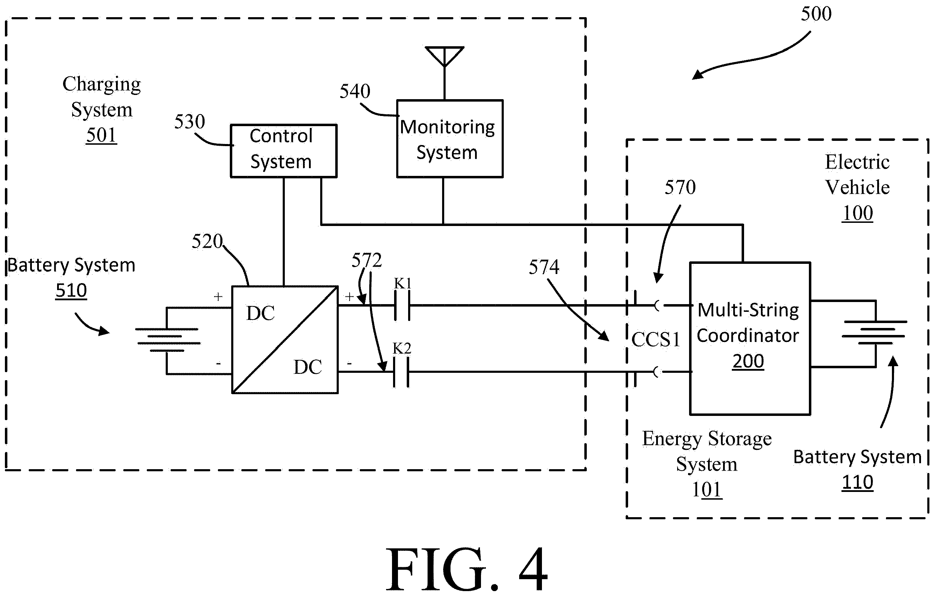

Referring now to FIG. 4, a schematic view of a charging ecosystem 500 for an electric vehicle 100 (e.g., an electrically powered aircraft) is illustrated, in accordance with various embodiments. The charging ecosystem 500 comprises the energy storage system 101 of the electric vehicle 100 as described previously herein and a charging system 501. The charging system 501 can comprise a mobile charging system (i.e., a charging system configured to be transported from one location to another); however, the present disclosure is not limited in this regard. A "mobile charging system" as referred to herein refers to a battery system fixedly coupled to a wheeled vehicle (e.g., a truck, a lift, a van, a bus, a specialty vehicle, or the like) or a non-wheeled vehicle (e.g., vehicle with continuous track system, train system, etc.).

The charging system 501 comprises a battery system 510. The electric vehicle 100 comprises the energy storage system 101 including the battery system 110 described previously herein. "Battery system" as described herein refers to a plurality of battery modules (e.g., a string of battery modules as shown in FIG. 1).

In various embodiments, the charging system 501 comprises the battery system 510, a bi-directional direct current ("DC") / DC converter 520, a control system 530, and a monitoring system 540. In various embodiments, the battery system 510 may include a plurality of battery modules (i.e., in accordance with the battery modules of the string of battery modules 124, 134, 144 from FIG. 1). In various embodiments, the battery system 510 is configured to charge the battery system 110 (i.e., in accordance with the process 300 from FIG. 2) of the electric vehicle 100. In various embodiments, the battery system 510 is configured to be charged via a fixed electrical grid (e.g., configured to receive AC / DC input power) or the like. In various embodiments, the bi-directional DC / DC converter 520 is in operable communication with the control system 530. In this regard, the control system 530 may be configured to control charging of the battery system 110 of the electric vehicle 100, via the battery system 510 through the DC / DC converter 520. In various embodiments, the battery system 510 may be mounted within a vehicle. In various embodiments, the battery system 510 may be a component of an energy storage system of the charging system 501.

In various embodiments, the charging ecosystem 500 comprises a combined charging system (CCS) 570 configured for high-power DC fast charging. Although illustrated as comprising a United States style combined charging system ("CCS1"), the charging system is not limited in this regard. For example, the combined charging system 570 may comprise a European style combined charging system ("CCS2"), Chademo, GBT, or any other emerging aerospace standard charging system, in accordance with various embodiments.

In various embodiments, the charging system 501 includes electrical cables 572. The electrical cables 572 extend from the bi-directional DC / DC converter 520 to a combo plug 574 of the combined charging system 570. The combo plug 574 of the combined charging system 570 is configured to be electrically coupled to a socket (e.g., the charging interface 210 of the multi-string coordinator 200 as shown in FIG. 1) of the combined charging system 570. In various embodiments, the combo plug 574 is a component of the charging system 501 and the socket is a component of the multi-string coordinator 200.

In various embodiments, the bi-directional DC / DC converter 520 is configured to act as an impedance matching device. Additionally, the bi-directional DC / DC converter 520 is configured to allow power to be shuttled to and from each battery power management unit (e.g., BPMU-1 120, BPMU-2 130, and BPMU-N 140 from FIG. 1) of the battery system 110 of the energy storage system 101, thereby enabling advanced battery state of health estimation at every charge cycle, in accordance with various embodiments. Thus, each charge cycle may be an opportunity to assess the state of health ("SoH") of each battery module in the string of battery modules (e.g., string of battery modules 124, string of battery modules 134, and string of battery modules 144) of the battery system 110 of the electric vehicle 100, which may be utilized to commission each battery module prior to each flight, in accordance with various embodiments.

In various embodiments, the control system 530 comprises a supervisory control and data acquisition system ("SCADA"). In this regard, the SCADA system may be configured to monitor and control processes of the charging system 501 from a remote location.

In various embodiments, the monitoring system 540 is in operable communication with a multi-string coordinator 200 in response to the monitoring system 540 being electrically coupled to the multi-string coordinator 200, or in response to the electric vehicle 100 becoming in range of a wireless network of the monitoring system 540. In various embodiments, the monitoring system 540 comprises remote telemetry (i.e., a remote telemetry unit ("RTU") with a microprocessor-based remote device configured to monitor and report events of the multi-string coordinator 200). The monitoring system 540 may be configured to communicate with the multi-string coordinator 200 of the electric vehicle 100 through a wireless or wired connection. In various embodiments, the monitoring system 540 may be configured to transmit any data received during a charging event or the like to external servers for data collection through wireless or wired connections. The present disclosure is not limited in this regard. In various embodiments, the multi-string coordinator 200 communicates with the monitoring system 540 via a wireless network. In this regard, in response to the multi-string coordinator 200 becoming in range of the wireless network, the multi-string coordinator 200 may be configured to transfer information related to operation history of the battery system 110 to the monitoring system 540. In this regard, the battery system 110 may be continuously monitored for airworthiness, in accordance with various embodiments.

In various embodiments, as described previously herein, the multi-string coordinator 200 includes data handling capabilities. In this regard, the multi-string coordinator 200 can receive and record battery data from the battery system 110 during flight and transmit the battery data to the monitoring system 540 of the charging system 501, in accordance with various embodiments.

Moreover, the charging system 501 can optionally be in connection with a remote system and may be configured to charge and/or discharge the battery system 510 and the battery system 110. In connection with that, charging and/or discharging in order to determine a SoH of each of the battery system 510, the battery system 110, and individual battery modules within each battery system can be performed. Thus, the SOH of each module of the battery systems 510, 110 can be known each time the aircraft is connected to charging system 501, and the desirability of swapping of batteries can be assessed in real-time at each aircraft charging session. In addition, if swapping is indicated as desirable, the swap out module is already located in proximity to the aircraft and its current SoH is known.

In various embodiments, SoH may be determined by measured methods, predicted methods, or a combination of measured and predicted methods. In various embodiments, the SoH may be determined from a voltage differential measured under a load and used to measure internal impedance. In various embodiments, the SoH may be determined based on measured energy supplied or received during a large depth of discharge cycle. In various embodiments, the SoH may be determined based on a Department of Defense capacity test. The present disclosure is not limited in this regard.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc. indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A multi-string coordinator, comprising:

   a tangible, non-transitory device configured to communicate with one or more processors;
   the tangible, non-transitory device having instructions stored thereon that, in response to the one or more processors, cause the one or more processors to perform operations comprising:

   receiving, via the one or more processors, a charger identification associated with a charger electrically coupled to the multi-string coordinator; and
   transmitting, via the one or more processors, one of the charger identification and a capacity of the charger to a first battery power management unit and a second battery power management unit of a battery system of an electric vehicle.

2. The multi-string coordinator of claim 1, wherein in response to the transmitting, charging a first string of battery modules of the first battery power management unit and a second string of battery modules of the second battery power management unit based on the capacity.

3. The multi-string coordinator of claim 2, wherein the operations further comprise commanding the first battery power management unit to charge the first string of battery modules from a first voltage to a second voltage to correcting a string imbalance between the first string of battery modules and the second string of battery modules.

4. The multi-string coordinator of claim 3, wherein the string imbalance comprises a voltage difference percentage that is greater than a voltage difference percentage threshold.

5. The multi-string coordinator of claim 1, further comprising an indicator, wherein the operations further comprise:

   receiving, via the one or more processors and from the first battery power management unit, a fault indicator;
   commanding, via the one or more processors, the indicator to provide an indication that the first battery power management unit is faulty; and
   transmitting, via the one or more processors, the fault indicator to the charger.

6. The multi-string coordinator of claim 1, wherein the operations further comprise:

   receiving, via the one or more processors and from the first battery power management unit, operational data of the first battery power management unit;
   storing, via the one or more processors, the operational data; and
   transmitting, via the one or more processors, the operational data off-board in response to the multi-string coordinator being coupled to the charger.

7. The multi-string coordinator of claim 1, wherein the operations further comprise:

   determining, via the one or more processors, whether a string imbalance between the first battery power management unit and the second battery power management unit exceeds a string imbalance threshold; and
   commanding, via the one or more processors, the first battery power management unit to charge a first string of battery modules of the first battery power management unit from a first voltage to a second voltage in response to the string imbalance exceeding the string imbalance threshold.

8. The multi-string coordinator of claim 1, further comprising a charging interface, wherein the charging interface comprises a discrete pin compatibility and a modular interface configured to support various chargers.

9. An energy storage system comprising the multi-string coordinator of claim 1, the energy storage system comprising:
   the battery system comprising a plurality of battery power management units, each of the plurality of battery power management units comprising a string of battery modules and a battery management system configured to control a discharge of the string of battery modules, wherein the multi-string coordinator is electrically coupled to the battery management system of each of the plurality of battery power management units, the multi-string coordinator configured to communicate with the battery management system of each of the plurality of battery power management units.

10. The electric vehicle comprising the energy storage system of claim 9.

11. A method for operating a multi-string coordinator, comprising:

receiving, via the multi-string coordinator, battery data from a first battery power management unit and a second battery power management unit in a battery system;
determining, via the multi-string coordinator, whether a string imbalance between the first battery power management unit and the second battery power management unit exceeds a string imbalance threshold; and
commanding, via the multi-string coordinator and through a commanding step, the first battery power management unit to charge a first string of battery modules of the first battery power management unit from a first voltage to a second voltage in response to the string imbalance exceeding the string imbalance threshold.

12. The method of claim 11, further comprising:

receiving, via the multi-string coordinator, a charger identification associated with a charger electrically coupled to the multi-string coordinator;
transmitting, via the multi-string coordinator, the charger identification to the first battery power management unit and the second battery power management unit; and
modifying, via the multi-string coordinator, charge limits of the battery system based on the charger identification.

13. The method of claim 12, wherein the first battery power management unit is charged based on a charging protocol associated with the charger identification.

14. The method of claim 12, further comprising:

transmitting, via the multi-string coordinator, a capacity value of the battery system to the first battery power management unit and the second battery power management unit based on the charger identification; and/or
commanding, via the multi-string coordinator, the first battery power management unit and the second battery power management unit to charge the first string of battery modules of the first battery power management unit and a second string of battery modules of the second battery power management unit together in response to the string imbalance falling below the string imbalance threshold.

15. The method of claim 11, wherein:

in response to the commanding step, the first battery power management unit, the first string of battery modules are charged via the first battery power management unit from the first voltage to the second voltage, and/or
the string imbalance comprises a percentage voltage difference between the first battery power management unit and the second battery power management unit.

FIG. 1

~ 300

Receiving, via a multi-string coordinator, battery data from a first battery powered management unit and a second battery powered management unit | 302

Determining, via the multi-string coordinator, whether a string imbalance between the first battery powered management unit and the second battery powered management unit exceeds a string imbalance thereshold | 304

Commanding, via the multi-string coordinator, the first battery powered management unit to charge a first string of battery modules in response to the string imbalance exceeding the string imbalance threshold | 306

In response to the commanding, charging, the first string of battery modules are charged via the battery powered management unit from a first voltage to a second voltage | 308

Commanding, via the multi-string coordinator, the first battery powered management unit and the second battery powered management unit together in response to the string imbalance falling below the string imbalance threshold | 310

# FIG. 2

400

Receiving, via a controller, a charger identification associated with a charger electrically coupled to a multi-string coordinator — 402

Transmitting, via the processor, one of the charger identification and a capacity of the charger to a first battery powered management unit and a second battery powered management unit — 404

In response to transmitting the one of the charger identification and the capacity of the charger, the first battery power management unit and the second battery powered management unit are charged based on the capacity of the charger — 406

Managing, via the processor, a charge threshold for the first battery powered management unit and the second battery powered management unit — 408

# FIG. 3

FIG. 4

Europäisches
Patentamt

European
Patent Office

Office européen
des brevets

**EUROPEAN SEARCH REPORT**

Application Number

EP 24 15 3912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/113918 A1 (SUMITOMO ELECTRIC INDUSTRIES [JP]) 2 June 2022 (2022-06-02) | 1-4,7-15 | INV. H02J7/00 |
| Y | * figures 5A, 6-8 * <br> * paragraphs [0012], [0056] - [0068] * <br> ----- | 5,6 | |
| Y | WO 2019/084507 A1 (RIVIAN HOLDINGS LLC [US]) 2 May 2019 (2019-05-02) <br> * paragraph [0129] * <br> ----- | 5,6 | |
| A | EP 2 874 270 A1 (TOSHIBA KK [JP]) 20 May 2015 (2015-05-20) <br> * figure 13 * <br> * paragraphs [0094] - [0107] * <br> ----- | 1-15 | |

TECHNICAL FIELDS
SEARCHED        (IPC)

H02J

The present search report has been drawn up for all claims

| Place of search | Date of completion of the search | Examiner |
|---|---|---|
| Munich | 2 July 2024 | Berger, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 3912

This annex lists the patent family members relating to the patent documents cited in  the above-mentioned European search report.
The members are as contained in the European Patent Office EDP file on
The European Patent Office is in no way liable for these particulars which are merely given for the purpose of information.

02-07-2024

| Patent document cited in search report | Publication date | Patent family member(s) | | Publication date |
|---|---|---|---|---|
| WO 2022113918 A1 | 02-06-2022 | NONE | | |
| WO 2019084507 A1 | 02-05-2019 | CN | 111433998 A | 17-07-2020 |
| | | DE | 112018005101 T5 | 27-08-2020 |
| | | US | 2019126761 A1 | 02-05-2019 |
| | | WO | 2019084507 A1 | 02-05-2019 |
| EP 2874270 A1 | 20-05-2015 | CN | 104160580 A | 19-11-2014 |
| | | EP | 2874270 A1 | 20-05-2015 |
| | | JP | 5955714 B2 | 20-07-2016 |
| | | JP | 2014060875 A | 03-04-2014 |
| | | MY | 171349 A | 09-10-2019 |
| | | US | 2014077731 A1 | 20-03-2014 |
| | | WO | 2014045666 A1 | 27-03-2014 |

EPO FORM P0459

For more details about this annex : see Official Journal of the European Patent Office, No. 12/82